**Europäisches Patentamt**

**European Patent Office**

**Office européen des brevets**

(19)

(11) Veröffentlichungsnummer: **0 117 400
B1**

(12)

# EUROPÄISCHE PATENTSCHRIFT

(45) Veröffentlichungstag der Patentschrift:
**07.01.88**

(21) Anmeldenummer: **84100308.0**

(22) Anmeldetag: **13.01.84**

(51) Int. Cl.⁴: **B 23 B 27/16**

(54) **Neuneckige Wendeschneidplatte.**

(30) Priorität: **01.02.83 DE 3303263**

(43) Veröffentlichungstag der Anmeldung:
**05.09.84 Patentblatt 84/36**

(45) Bekanntmachung des Hinweises auf die Patenterteilung:
**07.01.88 Patentblatt 88/1**

(84) Benannte Vertragsstaaten:
**FR GB IT**

(56) Entgegenhaltungen:
**DE - A - 2 734 095**
**DE - B - 2 210 816**
**DE - B - 2 238 888**
**DE - B - 2 640 474**
**GB - A - 1 567 004**
**US - A - 3 621 549**
**US - A - 4 086 016**

(73) Patentinhaber: **Fried. Krupp Gesellschaft mit
beschränkter Haftung, Altendorfer Strasse 103,
D-4300 Essen 1 (DE)**

(72) Erfinder: **Philippi, Engelbert, Zum Steinhübel 33,
D-6632 Saarwellingen 4 (DE)**

## Beschreibung

Die Erfindung betrifft eine neuneckige Wendeschneidplatte, die auf der Unter- und Oberseite mehrere ungleich lange Haupt- und Nebenschneiden aufweist und annähernd die Form eines gleichseitigen Dreiecks mit symmetrisch abgewinkelten Spitzen hat, wobei die Hauptschneiden im Bereich der abgewinkelten Spitzen liegen und kürzer als die Nebenschneiden sind. Eine derartige Wendeschneidplatte wird unter anderem zur schälenden Bearbeitung der Oberfläche von Rundstäben, Wellen, Achsen und Rohren verwendet und besteht aus Schnellarbeitsstahl und/oder Hartmetall. Das Schälen wird von der metallverarbeitenden Industrie in grossem Umfang durchgeführt. Daher sind die Hersteller und Anwender von Schälwerkzeugen bemüht, die Qualität der durch das Schälen hergestellten Produkte zu verbessern und die Wirtschaftlichkeit des Schälens zu erhöhen, was insbesondere durch eine entsprechende Gestaltung der zum Schälen verwendeten Schneideinsätze erreicht werden kann.

Aus der deutschen Patentschrift 2 640 474 sind bereits Wendeschneidplatten bekannt, die eine hexagonale Grundform haben und bei denen jeweils zwei gleich lange Seiten als Haupt- und Nebenschneiden zusammenwirken. Diese Wendeschneidplatten besitzen zwar insgesamt sechs nutzbare Schneiden, nämlich je drei an der Ober- und drei an der Unterseite. Da jedoch beim Einsatz zum Schälen bei diesen Wendeschneidplatten die Hauptbeanspruchung im Eckenbereich, wo Haupt- und Nebenschneide zusammenstossen, auftritt, erfolgt dort nicht nur ein erhöhter Freiflächenverschleiss, sondern oft auch eine Beschädigung der Schneide mit Ausbrüchen, die bis zur Unterseite der Platte durchlaufen. In solchen Fällen kann die Unterseite der Platte nicht mehr benutzt werden.

Nachteilig ist bei diesen Wendeschneidplatten auch, dass die Nebenschneiden die gleiche Länge wie die Hauptschneiden haben. Deshalb können mit solchen Platten keine grösseren Vorschubleistungen gefahren werden.

Es sind deshalb auch schon Schneideinsätze entwickelt worden, die die Form eines länglichen Achtecks aufweisen und auf der Vorder- und Rückseite je zwei schräg gegenüberliegende Schneidkanten mit daran anschliessender Nebenschneide besitzen. Bei diesen Schneideinsätzen, deren vier Schmalseiten als Halte- und Klemmflächen dienen, sind Haupt- und Nebenschneiden unterschiedlich lang, und es ist am Ende der gegenüber der Hauptschneide längeren Nebenschneide ein Auslauf vorgesehen, der zur Verbesserung der Güte der Oberfläche des zu bearbeitenden Werkstücks beitragen soll. Mit Schneidplatten dieser Art lassen sich jedoch höchstens nur vier Schneiden ausnutzen. Ausserdem sind diese Schneidplatten wegen ihrer länglichen Form und ihres relativ geringen Querschnitts in der Mitte bruchgefährdet.

Aus der US-Patentschrift 3 621 549 ist eine neuneckige Wendeschneidplatte bekannt, die allerdings für Schälarbeiten wenig geeignet ist, weil die als Hauptschneide in Frage kommende Kante in Verbindung mit der Winkelstellung nur eine geringe Schnittiefe erlaubt. Ausserdem erzeugt diese Platte beim Schälen Vorschubriefen.

Der Erfindung liegt die Aufgabe zugrunde, eine insbesondere zum Schälen geeignete neuneckige Wendeschneidplatte zu schaffen, die eine grosse Anzahl nutzbarer Schneiden besitzt, ein geringes Volumen hat und mit der eine hohe Vorschubleistung sowie eine gute Oberflächengüte erreicht wird. Die der Erfindung zugrunde liegende Aufgabe wird dadurch gelöst, dass das Verhältnis der Länge der Hauptschneiden zur Länge der Nebenschneiden 1:1,5 bis 1:3 beträgt, dass die Hauptschneiden über gerundete Ecken in die Nebenschneiden übergehen, wobei der Radius der gerundeten Ecken etwa dem Radius des eingeschriebenen Kreises der Wendeschneidplatte entspricht, und dass die Hauptschneiden an der Oberseite den Hauptschneiden an der Unterseite seitenverkehrt gegenüberliegen.

Durch die erfindungsgemässe Form der Wendeschneidplatte ist sichergestellt, dass sie ein vergleichsweise geringes Volumen besitzt. Die im Vergleich zu den Nebenschneiden kurze Ausbildung der Hauptschneiden gewährleistet eine gleichmässige Aufnahme und Ableitung der beim Schälvorgang auftretenden Schnittkräfte, wodurch auch bei einer hohen Vorschubleistung ein gleichmässiger Verschleiss, insbesondere im Eckenbereich, eintritt. Die bei der erfindungsgemässen Wendeschneidplatte vorhandenen sechs Haupt- und sechs Nebenschneiden sind also alle nutzbar, da sie einem gleichmässigen Verschleiss unterliegen, was auf das Zusammenwirken des Verhältnisses der Länge der Hauptschneiden zur Länge der Nebenschneiden und des gerundeten Übergangs der kurzen Haupt- und langen Nebenschneiden zurückgeführt wird. Hinzu kommt, dass durch den gerundeten Übergang der Haupt- und Nebenschneiden die Vorschubreifen geglättet werden, die bei den Schälarbeiten entstehen. Die entsprechend der Erfindung gestaltete Wendeschneidplatte hat also insbesondere im Eckenbereich eine erhöhte Stabilität und ermöglicht die Durchführung von Schälarbeiten bei hoher Vorschubleistung und guter Oberflächengüte.

Der Spanablauf kann bei der entsprechend der Erfindung gestalteten Wendeschneidplatte dadurch verbessert werden, dass jeder Hauptschneide eine Spanformnut zugeordnet ist, die in etwa parallel zur Hauptschneide verläuft. In weiterer Ausgestaltung der Erfindung ist vorgesehen, dass im Zentrum der Unter- und Oberseite der Wendeschneidplatte jeweils eine Spannmulde angeordnet ist oder dass die Wendeschneidplatte in der Mitte ein Befestigungsloch aufweist. Über die Spannmulde oder das Befestigungsloch wird die Wendeschneidplatte mit entsprechenden Elementen sicher im Schälwerkzeug festgespannt.

Der Gegenstand der Erfindung wird nachfolgend anhand der Zeichnung näher erläutert. Es zeigen:

Fig. 1 perspektivische Darstellung der erfindungsgemässen Wendeschneidplatte,

Fig. 2 Draufsicht auf die erfindungsgemässe Wendeschneidplatte,

Fig. 3 Seitenansicht der erfindungsgemässen Wendeschneidplatte.

Die Wendeschneidplatte 1 besteht aus einem gesinterten Hartmetall, das aus einem Bindemetall, vorzugsweise Cobalt, und einem Hartstoff, vorzugsweise Wolframcarbid, zusammengesetzt ist. Die Wendeschneidplatte kann aber auch aus Schnellarbeitsstahl oder aus einem Stahlgrundkörper mit eingelöteten Hartmetalleinsätzen bestehen. Die Wendeschneidplatte 1 besitzt neun Ecken und hat die Form eines gleichseitigen Dreiecks, dessen Spitzen symmetrisch abgewinkelt sind. Sowohl die Unter- als auch die Oberseite der Wendeschneidplatte 1 können zum Schälen benutzt werden, denn auf der Unterseite und der Oberseite sind jeweils drei Hauptschneiden angeordnet. Die auf der Oberseite liegenden Hauptschneiden 2a, 2b und 2c sind nicht parallel zu den drei Hauptschneiden der Unterseite angeordnet, sondern liegen diesen seitenverkehrt gegenüber, und an der gemeinsamen Ecke der Hauptschneiden der Ober- und Unterseite greifen die Schnittkräfte in entgegengesetzter Richtung an, wodurch eine Verschleissminderung erreicht wird. Die Nebenschneiden 3a, 3b und 3c sind länger als die Hauptschneiden 2a, 2b und 2c. Dadurch, dass die Nebenschneiden 3a, 3b, 3c länger sind als die an den Dreieckspitzen angeordneten Hauptschneiden 2a, 2b, 2c, kann beim Schälvorgang eine grössere Vorschubleistung erzielt werden.

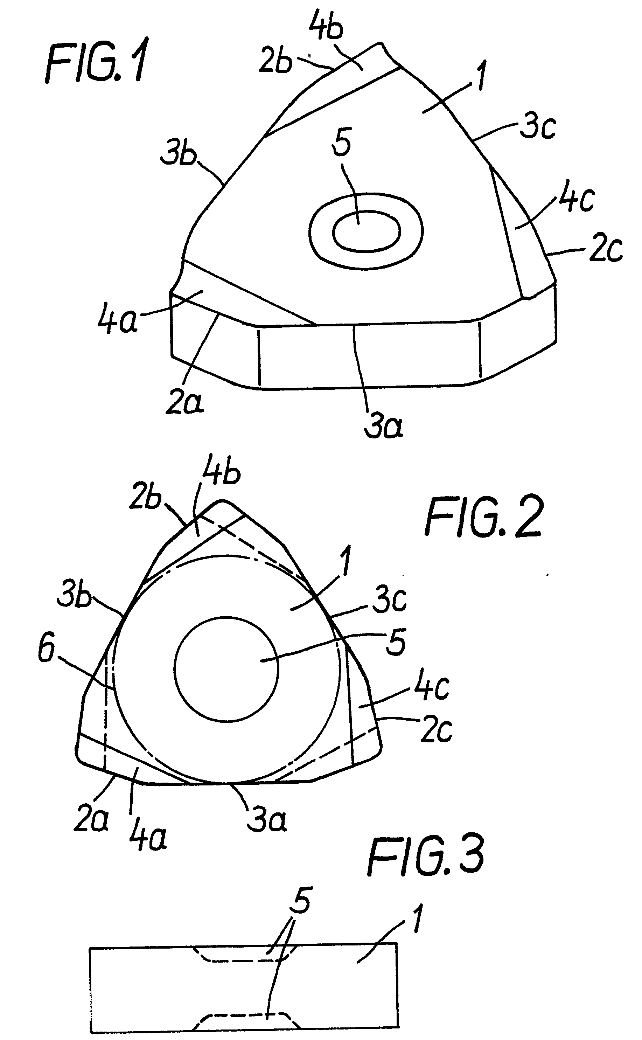

In etwa parallel zu den Hauptschneiden 2a, 2b und 2c sind auf der Oberseite der Wendeschneidplatte 1 Spanformnuten 4a, 4b und 4c angeordnet, die in bekannter Weise eine Verbesserung des Spanablaufs bewirken. In der Figur 2 sind die auf der Unterseite angeordneten drei entsprechenden Spanformnuten durch gestrichelte Linien dargestellt. Die gestrichelten Linien machen deutlich, dass sich die Hauptschneiden und die Spanformnuten der Unter- und Oberseite der Wendeschneidplatte 1 gegenüberliegen und sich nicht auf der gleichen Seite befinden. Auf der Ober- und Unterseite der Wendeschneidplatte 1 befindet sich jeweils eine Spannmulde 5, über welche die Wendeschneidplatte 1 mit dem Schälwerkzeug durch Klemmen verbunden wird. Die Wendeschneidplatte kann auch über ein in der Mitte angeordnetes Befestigungsloch festgespannt werden. Die neun Ecken der Wendeschneidplatte 1 sind gerundet, wobei die Hauptschneiden 2a, 2b, 2c mit einem grossen Radius in die Nebenschneiden 3a, 3b, 3c übergehen, welcher etwa dem Radius des eingeschriebenen Kreises 6 der Wendeschneidplatte 1 entspricht. Die Ober- und Unterseite der Wendeschneidplatte 1 verlaufen zueinander parallel, und die Seitenflächen der Wendeschneidplatte 1 bilden mit der Unter- und Oberseite einen rechten Winkel.

## Patentansprüche

1. Neuneckige Wendeschneidplatte, die auf der Unter- und Oberseite jeweils drei ungleich lange Haupt- und Nebenschneiden aufweist und die Form eines gleichseitigen Dreiecks mit symmetrisch abgewinkelten Spitzen hat, wobei die Hauptschneiden (2a, 2b, 2c) im Bereich der abgewinkelten Spitzen liegen und kürzer als die Nebenschneiden (3a, 3b, 3c) sind, dadurch gekennzeichnet, dass das Verhältnis der Länge der Hauptschneiden (2a, 2b, 2c) zur Länge der Nebenschneiden (3a, 3b, 3c) 1 : 1,5 bis 1 : 3 beträgt, dass die Hauptschneiden (2a, 2b, 2c) über gerundete Ecken in die Nebenschneiden (3a, 3b, 3c) übergehen, wobei der Radius der gerundeten Ecken etwa dem Radius des eingeschriebenen Kreises (6) der Wendeschneidplatte (1) entspricht, und dass die Hauptschneiden (2a, 2b, 2c) an der Oberseite den Hauptschneiden an der Unterseite seitenverkehrt gegenüberliegen.

2. Wendeschneidplatte nach Anspruch 1, dadurch gekennzeichnet, dass jeder Hauptschneide (2a, 2b, 2c) eine Spanformnut (4a, 4b, 4c) zugeordnet ist, die in etwa parallel zur Hauptschneide verläuft.

3. Wendeschneidplatte nach den Ansprüchen 1 bis 2, dadurch gekennzeichnet, dass im Zentrum der Unter- und Oberseite jeweils eine Spannmulde (5) angeordnet ist.

4. Wendeschneidplatte nach den Ansprüchen 1 bis 2, dadurch gekennzeichnet, dass sie in der Mitte ein Befestigungsloch aufweist.

## Claims

1. A nonagonal indexable cutting insert which has on both its top and bottom sides three main and subsidiary cutting edges of unequal length and takes the form of an equilateral triangle with symmetrically bent apices, the main cutting edges (2a, 2b, 2c) lying in the zone of the bent apices and being shorter than the subsidiary cutting edges (3a, 3b, 3c), characterized in that the ratio between the length of the main cutting edges (2a, 2b, 2c) and the length of the subsidiary cutting edges (3a, 3b, 3c) is 1 : 1.5 to 1 : 3; the main cutting edges (2a, 2b, 2c) merge via rounded corners into the subsidiary cutting edges (3a, 3b, 3c), the radius of the rounded corners corresponding substantially to the radius of the inscribed circle (6) of the indexable cutting insert (1); and the main cutting edges (2a, 2b, 2c) on the top side are laterally inverted in relation to the main cutting edges on the bottom side.

2. An indexable cutting insert according to Claim 1, characterized in that associated with each main cutting edge (2a, 2b, 2c) is a chip shaping groove (4a, 4b, 4c) extending substantially parallel with the main cutting edge.

3. An indexable cutting insert according to Claims 1 to 2, characterized in that the centre of both the top and bottom sides is formed with a clamping trough (5).

4. An indexable cutting insert according to Claims 1 to 2, characterized in that it has an attaching hole in the centre.

## Revendications

1. Plaquette de coupe rotative à neuf coins qui comporte sur chacune de ses faces inférieure et supérieure, trois tranchants principaux et trois tranchants secondaires de longueurs différentes et qui a la forme d'un triangle équilatéral dont les sommets sont surbaissés d'une manière symétrique, les tranchants principaux (2a, 2b, 2c) se trouvant dans les zones des sommets surbaissés et étant plus courts que les tranchants secondaires (3a, 3b, 3c), caractérisée en ce que le rapport de la longueur des tranchants principaux (2a, 2b, 2c) à la longueur des tranchants secondaires (3a, 3b, 3c) est de 1 : 1,5 à 1 : 3, en ce que les tranchants principaux (2a, 2b, 2c) se rattachent par des coins arrondis aux tranchants secondaires (3a, 3b, 3c), le rayon des coins arrondis étant sensiblement égal au rayon du cercle inscrit (6) de la plaque de coupe rotative (1) et en ce que les tranchants principaux (2a, 2b, 2c) de la face supérieure sont antiparallèles aux tranchants principaux de la face inférieure.

2. Plaquette de coupe rotative selon la revendication 1, caractérisée en ce qu'à chaque tranchant principal (2a, 2b, 2c) correspond une rainure (4a, 4b, 4c) de formation de copeaux qui est sensiblement parallèle au tranchant principal.

3. Plaquette de coupe rotative selon les revendications 1 et 2, caractérisée en ce que les centres de faces inférieure et supérieure comportent une partie en retrait (5) pour le serrage.

4. Plaquette de coupe rotative selon les revendications 1 et 2, caractérisée en ce qu'elle comporte en son milieu un trou de fixation.

FIG.1

FIG.2

FIG.3